# FASCICULE DE BREVET EUROPEEN

(11) **EP 2 271 456 B1**
(45) Date de publication et mention de la délivrance du brevet: **18.01.2012**
(21) Numéro de dépôt: 09742277.8
(22) Date de dépôt: 08.04.2009
(51) Int. Cl.: B23K 1/00, B23K 1/008, B23K 3/08, F28D 9/00, F28F 3/00

(54) **PROCÉDÉ DE FABRICATION D'UN ÉCHANGEUR DE CHALEUR À PLAQUES UTILISANT UN ENSEMBLE DE CALES AYANT UNE FORME SENSIBLEMENT POLYGONALE OU ELLIPTIQUE**
VERFAHREN ZUR HERSTELLUNG EINES PLATTENWÄRMETAUSCHERS MITHILFE EINES SATZES VON DISTANZBLÖCKEN MIT ESSENTIELL POLYGONALER ODER ELLIPTISCHER FORM
METHOD OF MANUFACTURING A PLATE-TYPE HEAT EXCHANGER USING A SET OF SPACER BLOCKS HAVING AN ESSENTIALLY POLYGONAL OR ELLIPTICAL FORM

(30) Priorité: 28.04.2008 FR 0852841
(43) Date de publication de la demande: 12.01.2011
(73) Titulaire: L'Air Liquide Société Anonyme pour l'Etude et l'Exploitation des Procédés Georges Claude, 75007 Paris (FR)
(72) Inventeur: CRAYSSAC, Frédéric, F-78140 Velizy (FR); DESCHODT, Sophie, F-59120 Loos (FR); TRANIER, Jean-Pierre, F-94240 L'Hay-les-Roses (FR); WAGNER, Marc, F-94100 St Maur des Fosses (FR)
(74) Mandataire: Mercey, Fiona Susan
(86) Numéro de dépôt international: PCT/FR2009/050622
(87) Numéro de publication internationale: WO 2009/136079

(56) Documents cités:
- WO-A-2007/124028
- FR-A- 1 161 736
- FR-A- 2 887 020
- GB-A- 1 072 202
- US-A- 4 715 433
- US-A- 5 887 625

## Description

La présente invention concerne un procédé de fabrication d'un échangeur de chaleur à plaques du type comprenant une pluralité de plaques définissant des circuits pour la circulation de fluides et assemblées les unes aux autres par brasage et un échangeur de chaleur obtenu selon un tel procédé conformément au préambule de la revendication 1 (voir, par example, GBI 072 202).

Les échangeurs de chaleur à plaques sont généralement constitués d'un empilement de plaques délimitant des passages pour des fluides.

Afin d'améliorer l'échange thermique entre les fluides, des tôles ondulées, appelées ailettes ou ondes d'échange peuvent être placées en sandwich entre lesdites plaques constituant l'échangeur de chaleur. Les passages ainsi formés sont fermés latéralement par des barres latérales. L'échangeur de chaleur ainsi monté est ensuite brasé afin d'assurer une tenue de l'ensemble ainsi qu'un meilleur contact thermique.

Les échangeurs de chaleur à plaques peuvent être réalisés en aluminium ou en alliage d'aluminium afin d'assurer une bonne conductivité thermique et une bonne tenue mécanique.

Les échangeurs de l'état de la technique, par exemple décrits dans FR-A- 2 815 895, permettent d'échanger la chaleur de nombreux fluides, par exemple plus de 5 fluides. Les ondes d'échange généralement utilisées ont à la fois une fonction thermique en augmentant la surface d'échange et en améliorant l'efficacité thermique de l'échangeur, et une fonction mécanique en assurant la tenue mécanique de l'échangeur de chaleur lors du brasage et en évitant le flambage des passages. Ainsi, il peut arriver que la tenue mécanique soit l'élément dimensionnant l'ensemble. En particulier, l'onde n'est alors plus optimisée thermiquement.

Il est alors connu de substituer lesdites ondes d'échange par un revêtement amélioré sur les plaques séparatrices. Il peut également, dans certains cas, être intéressant de réduire la densité de l'onde, voire de la supprimer complètement pour éviter de masquer la surface améliorée de la plaque avec ladite onde.

Il convient alors de mettre au point un procédé de fabrication d'un échangeur de chaleur qui permet d'assurer la tenue mécanique dudit échangeur au cours de l'étape de brasage et qui soit facile à mettre en oeuvre.

Un but de la présente invention est de proposer un tel procédé de fabrication.

L'invention propose un procédé de fabrication d'un échangeur de chaleur à plaques du type comprenant une pluralité de plaques définissant avec des barres latérales disposées sur les plaques, des circuits pour la circulation de fluides conformément à la revendication 1.

Avantageusement, le procédé selon l'invention permet d'introduire et d'enlever une pluralité de cales d'entre les plaques de l'échangeur de chaleur facilement et rapidement.

En conséquence, l'ensemble de cales amovible est retiré après l'étape de brasage, libérant ainsi de l'espace dans le circuit de circulation de fluide.

L'introduction d'un ensemble de cales amovible, liées entre elles au moyen d'un élément de liaison, permet de simplifier le procédé. En effet, il peut être fastidieux de devoir introduire et ensuite enlever des cales individuellement.

D'autre part, il n'est pas nécessaire pendant la mise en oeuvre d'un procédé selon l'invention de positionner les cales lors de l'empilement des plaques composant l'échangeur, les cales pouvant être introduites au cours d'une étape ultérieure.

Un procédé selon l'invention peut en outre comporter l'une ou plusieurs des caractéristiques optionnelles ci-dessous, considérées individuellement ou selon toutes les combinaisons possibles:
- on introduit une pluralité d'ensembles de cales amovibles qu'on fixe entre eux au moyen d'éléments de fixation ;
- entre deux plaques dudit échangeur, on introduit un seul ensemble de cales amovible ;
- les cales dudit ensemble de cales et les éléments de liaison que l'on sélectionne sont constitués d'un ou de plusieurs matériaux dont la température de fusion est supérieure ou égale à 700°C, de préférence supérieure ou égale à 900°C, par exemple acier inoxydable ;
- toutes les cales dudit ensemble ont leur axe principal sensiblement parallèle entre eux.

Au sens de l'invention, on entend par « ensemble de cales amovible », un ensemble de cales qui, après l'étape de brasage de l'échangeur, peuvent être enlevées et réutilisées sans nécessiter de modification structurelle.

L'invention consiste à utiliser un ensemble de cales amovible afin de soutenir mécaniquement l'échangeur de chaleur pendant l'étape de brasage. En effet, afin d'améliorer l'étape de brasage, il est connu d'appliquer une pression sur l'échangeur pendant ladite étape de brasage. L'ensemble de cales permet d'éviter que les plaques constituant l'échangeur ne flambent sous la pression.

L'utilisation d'un ensemble de cales permet de réduire le nombre d'opération à effectuer lors de la fabrication de l'échangeur.

Selon un premier mode de réalisation de l'invention, le procédé comprend en outre une étape où l'on sélectionne l'ensemble de cales amovible de manière à ce que chaque cale présente une section sensiblement constante le long de son axe principal :
- ladite section ayant une forme de carré, et
- la longueur du côté du carré est égale à la distance entre les plaques de l'échangeur entre lesquelles ladite cale est destinée à être introduite.

Les cales de l'ensemble sélectionné sont liées entre elles, par exemple par des barres de liaisons régulièrement réparties le long des cales de l'ensemble. Les barres de liaisons peuvent être soudées aux cales.

Avantageusement, un tel ensemble est facile à manipuler et permet de disposer une pluralité de cales entre deux plaques de l'échangeur de manière très simple. En effet, il suffit de faire glisser l'ensemble de cales entre les plaques de l'échangeur.

Après l'étape de brasage, l'ensemble de cales peut facilement être enlevé, là encore l'opération est rendue facile grâce aux éléments de liaison.

Conformément à l'invention, le procédé comprend en outre une étape où l'on sélectionne l'ensemble de cales amovible de manière à ce que :
- chaque cale présente une section sensiblement constante le long de son axe principal,
- ladite section ayant une forme de losange,
- la longueur de la grande diagonale de ladite section est supérieure ou égale à la distance entre les plaques de l'échangeur entre lesquelles ladite cale est destinée à être introduite, et
- la longueur de la petite diagonale de ladite section est inférieure à la distance entre les plaques de l'échangeur entre lesquelles ladite cale est destinée à être introduite.

On entend par « losange » tout polygone simple à quatre côtés équilatéraux.

La jonction entre les cales peut être réalisée au moyen d'éléments de liaison, liés aux cales, par exemple par soudage.

Les éléments de liaison peuvent comprendre un dispositif mécanique du type articulation, ressort, transmission, bielle permettant d'imposer à l'ensemble des cales un mouvement, par exemple, un mouvement de rotation autour de l'axe principal de chacune des cales de l'ensemble de cales.

Avantageusement, la sélection d'un tel ensemble de cales amovible permet de disposer l'ensemble des cales entre au moins deux plaques de l'échangeur de manière à ce que la surface de contact de chacune des cales avec les plaques soit inférieure ou égale à 15 % de la surface totale de chaque cale, de préférence inférieure ou égale à 5 % de la surface totale de chaque cale.

Plus la surface de contact entre chaque cale et les plaques entre lesquelles les cales sont introduites est faible, moins il y a de risque qu'au cours de l'étape de brasage les cales soient soudées aux dites plaques. Selon ce mode de réalisation, l'ensemble des cales sélectionné est disposé entre les plaques d'un échangeur de chaleur préalablement assemblé.

Cette étape de mise en place des cales peut comprendre deux sous-étapes. On peut, dans un premier temps, introduire chaque ensemble de cales entre deux plaques avec une orientation telle que la grande diagonale de la section de chaque cale se trouve dans un plan sensiblement parallèle au plan défini par les plaques.

Avantageusement, l'ensemble de cales ayant été sélectionné de manière à ce que la petite diagonale de la section de chaque cale présente une longueur inférieure ou égale à la distance entre les plaques de l'échangeur entre lesquelles l'ensemble de cales est destiné à être introduit, chaque cale peut être introduite sans difficulté entre les deux plaques.

Dans un deuxième temps, une fois l'ensemble de cales introduit entre les deux plaques de l'échangeur, on peut, au moyen de l'élément de liaison, imposer un mouvement à l'ensemble des cales faisant pivoter chaque cale autour de son axe principal de manière à positionner chaque cale en buté entre les deux plaques.

Avantageusement, l'ensemble de cales ainsi positionné permet d'assurer une bonne tenue mécanique de l'échangeur de chaleur au cours de l'étape de brasage.

Toujours selon l'invention le procédé comprend une étape après l'étape de brasage où l'on enlève l'ensemble de cales amovible d'entre les plaques de l'échangeur brasé.

Avantageusement, les cales de l'ensemble de cales amovible sélectionnées ne sont pas soudées aux plaques au cours de l'étape de brasage, grâce entre autre à une surface de contact réduite entre chacune des cales et les plaques.

Selon l'invention, l'ensemble de cales amovible peut être enlevé en faisant pivoter chaque cale autour de son axe principal de manière à l'orienter tel que la grande diagonale de sa section se trouve dans un plan sensiblement parallèle aux plaques. Toutes les cales composant l'ensemble de cales peuvent être pivotées en même temps grâce à l'élément de liaison.

Avantageusement, l'étape d'enlèvement des cales s'en trouve facilitée.

Selon l'invention, le procédé comprend en outre une étape, on en sélectionne l'ensemble de cales amovible de manière à ce que :
1) chaque cale présente une section sensiblement constante le long de son axe principal,
2) ladite section ayant une forme en ellipse,
3) la longueur du grand axe de ladite section est supérieure ou égale à la distance entre les plaques de l'échangeur entre lesquelles ledit ensemble de cales est destiné à être introduit, et
4) la longueur du petit axe de ladite section est inférieure ou égale à la distance entre les plaques de l'échangeur entre lesquelles ledit ensemble de cales amovible est destiné à être introduit.

Les cales de l'ensemble de cales amovible sélectionné sont liées entre elles au moyen d'un élément de liaison, par exemple une barre rigide soudée sur chaque cale, ou encore une barre liée à chaque cale au moyen d'un dispositif mécanique du type articulation, ressort, transmission, bielle, permettant d'imposer à chaque cale de l'ensemble de cales amovible, un mouvement de rotation autour de leur axe principal. La sélection d'un tel ensemble de cales présente des avantages similaires à celui du mode de réalisation précédent.

En particulier, la surface de contact de chaque cale, une fois positionnée entre les plaques, peut être inférieure ou égale à 15% de la surface totale de ladite cale, de préférence inférieure ou égale à 5 % de la surface totale de ladite cale.

Les cales des ensembles de cales amovible sélectionnés au cours d'un procédé selon l'invention sont de préférence constituées d'un ou de plusieurs matériaux dont la température de fusion est supérieure à la température de brasage, par exemple, supérieure ou égale à 900°C ou encore supérieure ou égale à 1 500°C. Les cales des ensembles de cales sélectionnées peuvent par exemple être en acier inoxydable.

Un procédé selon l'invention peut en outre comprendre une étape où chaque cale des ensembles de cales sélectionnés est recouverte d'un produit empêchant ou limitant le brasage pendant la phase de brasage, tel que le STOP OFF ®.

Avantageusement, l'utilisation d'un tel produit permet de faciliter l'étape d'enlèvement des ensembles de cales des sections différentes des modes de réalisation décrits, par exemple, des sections hexagonales selon l'invention.

L'invention ne se limite pas au mode de réalisation décrit et peut être interprétée de façon non limitative et englobant tout mode de réalisation équivalent.

En particulier, l'invention est applicable à tout type d'échangeur de chaleur à plaques assemblé par brasage. En particulier, le procédé selon l'invention peut être mis en oeuvre avec des ensembles de cales dont les cales présentes des sections différentes des modes de réalisation décrits, par exemple, des sections hexagonales.

## Revendications

1. Procédé de fabrication d'un échangeur de chaleur à plaques du type comprenant une pluralité de plaques définissant avec des barres latérales disposées sur les plaques, des circuits pour la circulation de fluides, comprenant au moins les étapes successives suivantes :
- on approvisionne un empilement d'une pluralité de plaques séparées par des barres latérales,
- on introduit au moins un ensemble de cales amovible d'au moins deux cales, liées entre elles au moyen d'au moins un élément de liaison, entre des plaques dudit échangeur,
- on brase ledit échangeur, et
- on enlève l'ensemble de cales amovible
**caractérisé en ce que** l'élément de liaison est conformé de manière à permettre un mouvement de rotation de l'ensemble des cales autour de l'axe principal de chacune desdites cales, chaque cale présente une section sensiblement constante le long de son axe principal et
- après l'étape d'introduction, on impose un mouvement de rotation à toutes les cales dudit ensemble autour de leur axe principal, de manière à disposer chaque cale en butée contre lesdites plaques ;
- après l'étape de brasage, on impose un mouvement de rotation à toutes les cales dudit ensemble autour de leur axe principal, de manière à libérer lesdites cales soit
dans lequel on sélectionne ledit ensemble de cales amovible de manière à ce que soit
i)
• ladite section a une forme sensiblement polygonale, et
• la longueur d'au moins une des diagonales principales de ladite section est supérieure ou égale à la distance entre les plaques de l'échangeur entre lesquelles ladite cale est destinée à être introduite ; soit
ii)
• ladite section a une forme sensiblement elliptique et,
• la longueur du grand axe de ladite section est supérieure ou égale à la distance entre les plaques de l'échangeur entre lesquelles ladite cale est destinée à être introduite.

2. Procédé selon la revendication 1, **caractérisé en ce qu'**on introduit une pluralité d'ensembles de cales amovibles qu'on fixe entre eux au moyen d'éléments de fixation.

3. Procédé selon la revendication 2, **caractérisé en ce qu'**entre deux plaques dudit échangeur, on introduit un seul ensemble de cales amovible.

4. Procédé selon l'une quelconque des revendications précédentes, **caractérisé en ce que** les cales dudit ensemble de cales et les éléments de liaison que l'on sélectionne sont constitués d'un ou de plusieurs matériaux dont la température de fusion est supérieure ou égale à 700°C, de préférence supérieure ou égale à 900°C, par exemple acier inoxydable.

5. Procédé selon l'une quelconque des revendications précédentes, **caractérisé en ce que** toutes les cales dudit ensemble ont leur axe principal sensiblement parallèle entre eux.

## Claims

1. A method for producing a plate heat exchanger of the type comprising a plurality of plates which define, together with lateral rods arranged on the plates, circuits for the flow of fluids, said method comprising at least the following successive steps:
- a plurality of plates separated by lateral rods are stacked,
- at least one removable set of wedges formed of at least two wedges interconnected by means of at least one connection element is inserted between the plates of said exchanger,
- said exchanger is brazed, and
- the removable set of wedges is removed,
**characterized in that** the connection element is shaped so as to allow a rotational movement of the set of wedges about the main axis of each of said wedges, each wedge having a substantially constant cross-section along its main axis, and
- after the insertion step, a movement of rotation is imposed to each of the wedges of said set about their main axis so as to place each wedge in abutment against said plates;
- after the brazing step, a movement of rotation is imposed to each of the wedges of said set about their main axis so as to free said wedges, i.e.
said set of removable wedges being selected in such a way that either
i)
• said cross-section is substantially polygonal, and
• the length of at least one of the main diagonals of said cross-section is greater than or equal to the distance between the plates of the exchanger between which said wedge is intended to be inserted; or
ii)
• said cross-section is substantially elliptical, and
• the length of the major axis of said cross-section is greater than or equal to the distance between the plates of the exchanger between which said wedge is intended to be inserted.

2. The method according to claim 1, **characterized in that** a plurality of sets of removable wedges are inserted and are attached to one another by means of attachment elements.

3. The method according to claim 2, **characterized in that** a single removable set of wedges is inserted between two plates of said exchanger.

4. The method according to any one of the preceding claims, **characterized in that** the wedges of said set of wedges and the connection elements which are selected consist of one or more materials, the melting point of which is greater than or equal to 700°C, preferably greater than or equal to 900°C, for example stainless steel.

5. The method according to any one of the preceding claims, **characterized in that** all the wedges of said set have their main axis substantially parallel to one another.

## Patentansprüche

1. Verfahren zur Herstellung eines Plattenwärmetauschers vom Typ umfassend eine Vielzahl von Platten, die mit seitlichen Stangen, die auf den Platten angeordnet sind, Kreisläufe bilden für die Zirkulation von Fluiden, umfassend mindestens die folgenden aufeinanderfolgenden Schritte:
- es wird eine schichtweise Anordnung einer Vielzahl von Platten bereitgestellt, die durch seitliche Stangen getrennt sind,
- es wird mindestens eine entfernbare Anordnung von Keilen mit mindestens zwei Keilen, die mittels mindestens eines Verbindungselements miteinander verbunden sind, zwischen den Platten des Tauschers eingeführt,
- der Tauscher wird verlötet und
- die entfernbare Anordnung von Keilen wird entfernt,
**dadurch gekennzeichnet, dass** das Verbindungselement derart ausgebildet ist, dass es eine Drehbewegung der Anordnung der Keile um die Hauptachse jedes der Keile ermöglicht, wobei jeder Keil einen entlang seiner Hauptachse im Wesentlichen konstanten Querschnitt aufweist, und
- nach dem Schritt der Einführung werden sämtliche Keile der Anordnung einer Drehbewegung um ihre Hauptachse ausgesetzt, derart, dass jeder Keil in Anschlag gegen die Platten angeordnet wird;
- nach dem Schritt der Verlötung werden sämtliche Keile der Anordnung einer Drehbewegung um ihre Hauptachse ausgesetzt, derart, dass die Keile freigegeben werden,
wobei die entfernbare Anordnung von Keilen derart gewählt wird, dass entweder
i)
der Querschnitt eine im Wesentlichen polygonale Form hat und
die Länge mindestens einer der Hauptdiagonalen des Querschnitts größer oder gleich dem Abstand zwischen den Platten des Tauschers ist, zwischen denen der Keil zur Einführung vorgesehen ist; oder
(ii)
der Querschnitt eine im Wesentlichen elliptische Form hat und
die Länge der großen Achse des Querschnitts größer oder gleich dem Abstand zwischen den Platten des Tauschers ist, zwischen denen der Keil zur Einführung vorgesehen ist.

2. Verfahren nach Anspruch 1, **dadurch gekennzeichnet, dass** eine Vielzahl von entfernbaren Anordnungen von Keilen eingeführt wird, die untereinander mit Hilfe von Verbindungselementen befestigt werden.

3. Verfahren nach Anspruch 2, **dadurch gekennzeichnet, dass** zwischen zwei Platten des Tauschers eine einzige entfernbare Anordnung von Keilen eingeführt wird.

4. Verfahren nach einem der vorhergehenden Ansprüche, **dadurch gekennzeichnet, dass** die Keile der Anordnung von Keilen und die Verbindungselemente, die gewählt werden, aus einem oder mehreren Materialien gebildet sind, deren Schmelztemperatur größer oder gleich 700 °C, vorzugsweise größer oder gleich 900 °C ist, beispielsweise Edelstahl.

5. Verfahren nach einem der vorhergehenden Ansprüche, **dadurch gekennzeichnet, dass** sämtliche Keile der Anordnung ihre Hauptachse im Wesentlichen parallel zueinander haben.
